# EUROPEAN PATENT APPLICATION

(11) **EP 3 674 572 A1**
(43) Date of publication of application: **01.07.2020**
(21) Application number: 19218352.3
(22) Date of filing: 19.12.2019
(51) Int. Cl.: F16B 39/34, B05B 3/10

(54) **SELF-LOCKING THREADED FASTENING ASSEMBLY WITH THREAD TIGHTENING PINS AND USES THEREOF**

(30) Priority: 28.12.2018 US 201816235613
(71) Applicant: EFC Systems, Inc., Havre de Grace, MD 21078 (US)
(72) Inventor: VAN DER STEUR, Gunnar, Chesapeake City, MD 21915 (US); CICHOCKI, Joseph P., Newark, DE 19702 (US)
(74) Representative: Regimbeau

(57) **Abstract**

The present disclosure relates to a self-locking threaded fastening assembly that comprises malleable thread tightening pins within the threads of an externally-threaded male component or an internally-threaded female component, and uses thereof. In certain embodiments, the self-locking threaded fastening assembly is used in connection with a rotary paint atomizer system, for example to ensure secure connection between a bell cup and the drive shaft of a turbine apparatus.

## Description

### FIELD OF INVENTION

The present disclosure relates to a self-locking threaded fastening assembly that comprises malleable thread tightening pins within the threads of an externally-threaded male component or an internally-threaded female component, and uses thereof. In certain embodiments, the self-locking threaded fastening assembly is used in connection with a rotary paint atomizer system, for example to ensure secure connection between a bell cup and the drive shaft of a turbine apparatus.

### BACKGROUND

Threaded fastening assemblies have been used for many years in countless industries. Such assemblies include an externally-threaded male component, such as a bolt, that engages corresponding threads on an internally-threaded female component, such as a nut. Both the male and female components in threaded fastening assemblies are often made entirely or substantially of a generally non-malleable material, such as steel or another similar metal. In such cases, the threads of the male and female component tend to engage in a manner that leaves some amount of space between the corresponding threads, thereby allowing slippage and/or vibration between the male- and female-threaded parts during operation, which is generally undesirable.

In certain industries, components that are assembled using threaded fastening assemblies are subjected to high rotational and/or vibrational stresses. For example, rotary paint atomizers, which are used, for example, to paint automobile bodies in automobile assembly plants, often include a bell cup that is attached to a drive shaft of a turbine apparatus using a threaded fastening assembly. For example, the bell cup may include an externally-threaded male portion that engages a corresponding internally-threaded female portion on the drive shaft. During operation, the turbine spins the drive shaft and bell cup at speeds of 50,000 RPM or greater, subjecting the threaded attachment to high rotational stress and, in some cases, high vibrational stress. To ensure the attachment remains secure during rotational and vibrational stresses such as these, a thread locking system can be used.

Specifically with regard to rotary paint atomizers, several methods have been used to attempt to stop the bell cup from coming unthreaded from the drive shaft during use, as shown, for example in U.S. Patent No. 7,654,472 and U.S. Patent Publication No. 2010/0206962. These locking mechanisms are often directed toward a mechanical stop device that blocks rotation of the bell cup relative to the drive shaft until the mechanical stop is released. These locking mechanisms are often not an ideal solution because they add additional complexity to the bell cup and/or turbine, are subject to wear and/or breakage, and do not adequately address the issue of vibration due to the fact that they do nothing to reduce or eliminate the inherent gap between the threads of the bell cup and the turbine.

In other industries, various types of self-locking thread systems have been developed. These solutions are often directed toward creating increased friction or tension between the male and female parts by eliminating the gap between the corresponding threads along at least a portion of the threaded attachment. Several of these systems, such as those disclosed in U.S. Patent Nos. 2,913,031, 3,150,702, 3,173,466, and 3,182,702, involve the use of a malleable material, such as a plastic or elastomeric material, that is seated in a groove, channel, or cavern carved into the threads of the male component of the assembly. These solutions tend to overly weaken the screw due to removal of extensive materials within the threads. Conversely, if the groove was made sufficiently small to avoid weakening of the threads, they often do not produce sufficient friction/contact between the two components to be effective. Further, because the malleable material is merely seated in a groove, it can easily fall out of the groove prior to or during assembly, resulting in a loss of the locking functionality of the fastener.

Other prior art methods and assemblies for fastening screws used, for example, coatings or adhesives between the materials to be fastened. These methods and assemblies often provided undesirable friction properties, were difficult to handle, and were prone to unraveling when used.

There remains a need in the art for improved threaded fastening assemblies, including improved threaded fastening assemblies for use on rotary paint atomizers.

### SUMMARY

The present disclosure relates to a self-locking threaded fastening assembly that comprises an externally-threaded male portion of a first component and an internally-threaded female portion of a second component, wherein the threads of the male and female portion are corresponding, further comprising one or more malleable thread tightening pins within the threads of the male or female portion.

In certain embodiments, the thread locking system is used in connection with a rotary paint atomizer system, for example to ensure secure connection between a first component that is a bell cup and a second component that is a turbine apparatus. In certain examples, the bell cup comprises an externally-threaded male portion and the turbine apparatus comprises an internally-threaded female portion. In particular examples, the externally-threaded male portion of the bell cup comprises one or more thread tightening pins, for example three thread tightening pins.

In certain embodiments, the present disclosure relates to self-locking threaded fastening assembly comprising a first component comprising an externally-threaded male portion and a second component comprising an internally-threaded female portion, wherein the externally-threaded male portion and the internally-threaded female portion each comprise a thread depth and threaded length, wherein the thread depth is defined by the distance between a crest of the thread and a channel of the thread, wherein the threaded length is defined by the distance along the longitudinal axis of the threaded portion that comprises threads; wherein the externally-threaded male portion or the internally-threaded female portion comprises one or more pin holes therein, wherein the one or more pin holes are substantially perpendicular to the threads and are substantially parallel to the longitudinal axis of the threaded length, wherein the one or more pin holes are positioned such that they lie within at least a portion of the thread depth leaving the crest of the threads intact; and wherein the one or more pin holes comprise a thread tightening pin inserted therein, wherein the thread tightening pin comprises a malleable material.

In certain examples, the thread tightening pin comprises an elastomeric material. In particular examples, the thread tightening pin comprises a material selected from the group consisting of thermoplastic or thermoset materials. In other examples, the thread tightening pin comprises a material selected from the group consisting of nylon and polyether ether ketone. In additional examples, the thread tightening pin comprises an absorbent material.

In further examples, the thread tightening pin comprises a malleable metallic material. In particular examples, the thread tightening pin comprises a material selected from the group consisting of ferrous or non-ferrous materials. In other examples, the thread tightening pin comprises a material selected from the group consisting of bronze, and lead.

In other examples, the one or more thread tightening pins comprise a length and a cross sectional shape comprising a width or diameter, wherein the length of the thread tightening pins is at least 2 times greater than the thread pitch. In still further examples, the one or more thread tightening pins comprise a length and a cross sectional shape comprising a width or diameter, wherein the width or diameter of the thread tightening pin is about 40% to about 150% of the thread depth. In additional examples, the width/diameter of the pin holes are about 95% to 100% of the width/diameter of the thread tightening pins. In further examples, the one or more thread tightening pins are cylindrically shaped. In further examples, the thread tightening pin is tapered such that the width or diameter of the thread tightening pin at one end is 2%-20% greater than the width or diameter of the thread tightening pin at the opposite end.

In certain examples, the assembly comprises 1-6 thread tightening pin. In particular examples, the assembly comprises 3 thread tightening pins. In additional examples, the assembly comprises a plurality of thread tightening pins, wherein the thread tightening pins are substantially equally spaced along the circumference of the threaded portion.

In certain examples, the externally-threaded male portion comprises the one or more pin holes, while in other examples the internally-threaded female portion comprises the one or more pin holes.

In certain embodiments, the present disclosure relates to a rotary paint atomizer apparatus comprising a self-locking fastening assembly as described herein.

It is to be understood that both the foregoing Summary and the following Detailed Description are exemplary and explanatory only, and are not restrictive of the disclosure as claimed.

### BRIEF DESCRIPTION OF THE FIGURES

FIG. 1 depicts a cross-sectional view of an externally-threaded male portion of a component.
FIG. 2 depicts a cross-sectional view of an internally-threaded female portion of a component.
FIG. 3. Depicts a cross sectional view of the threaded portion of the shank of an externally-threaded male portion of a component comprising one or more thread tightening pins.
FIG. 4 depicts a cross-sectional view of the threaded portion of the recess of an internally-threaded female portion of a component comprising one or more thread tightening pins.
FIG. 5 depicts a perspective view of a bell cup comprising an externally-threaded male component comprising three pin holes within the threads and three corresponding thread tightening pins that are not inserted into their respective pin holes.
FIG. 6 depicts a perspective view of a bell cup comprising an externally-threaded male component comprising three pin holes within the threads and three corresponding thread tightening pins that are inserted into their respective pin holes.
FIG. 7 depicts a cross sectional view of a bell cup comprising an externally-threaded male portion comprising one or more pin holes within the threads and a corresponding thread tightening pin that is not inserted into its respective pin hole.
FIG. 8 depicts a cross sectional view of a bell cup comprising an externally-threaded male portion comprising one or more pin holes within the threads and a corresponding thread tightening pin that is inserted into its respective pin hole.
FIG. 9 depicts a cross sectional view of a first component comprising an externally-threaded male portion comprising one or more thread tightening pins that is threadably engaged with the internally-threaded female portion of a second component.

### DETAILED DESCRIPTION

Embodiments of the present disclosure provide a self-locking threaded fastening assembly and uses thereof. Embodiments of the disclosure can provide surprising improvements in vibration dampening, thread alignment, thread tightening, thread locking, and antislipping when compared to attempts in the prior art to tighten or lock threads.

Various examples and embodiments of the inventive subject matter disclosed herein are possible and will be apparent to a person of ordinary skill in the art, given the benefit of this disclosure. In this disclosure reference to "some embodiments," "certain embodiments," "certain exemplary embodiments," and similar phrases each means that those embodiments are non-limiting examples of the inventive subject matter, and there may be alternative embodiments which are not excluded.

The articles "a," "an," and "the" are used herein to refer to one or more than one (*i.e*., to at least one) of the grammatical object of the article. By way of example, "an element" means one element or more than one element.

As used herein, the term "about" means ±10% of the noted value. By way of example only, a pin depth of "about 30%" the depth of the thread can include from 27% the depth of the thread up to and including 33% the depth of the thread.

The word "comprising" is used in a manner consistent with its open-ended meaning, that is, to mean that a given product or process can optionally also have additional features or elements beyond those expressly described. It is understood that wherever embodiments are described with the language "comprising," otherwise analogous embodiments described in terms of "consisting of' and/or "consisting essentially of' are also contemplated and within the scope of this disclosure.

The present disclosure provides a self-locking threaded fastening assembly comprising a first component comprising an externally-threaded male component and a second component comprising an internally-threaded female component. In certain embodiments, the first and second components can be fasteners, such as bolts or machine screws and nuts. In other embodiments, the first and second components can be other types of components that comprise a threaded portion. For example, the self-locking threaded fastening system can be used in connection with a rotary paint atomizer system in which the first component is a bell cup and the second component is a turbine apparatus.

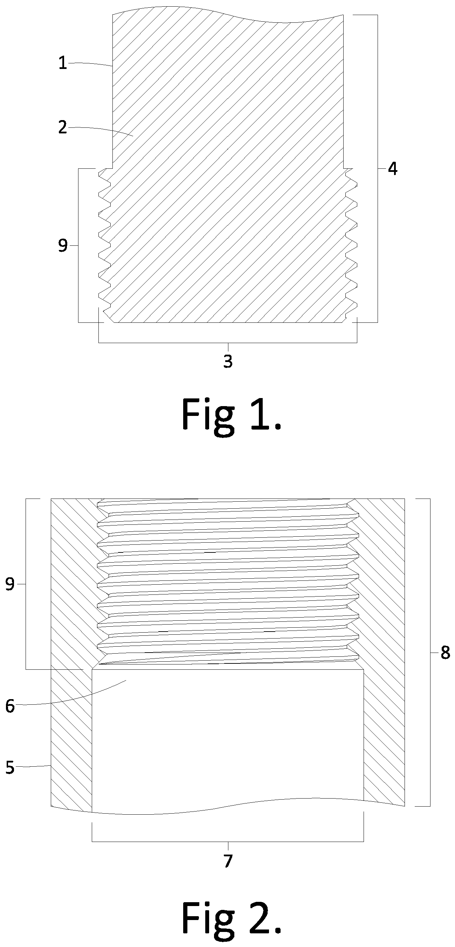

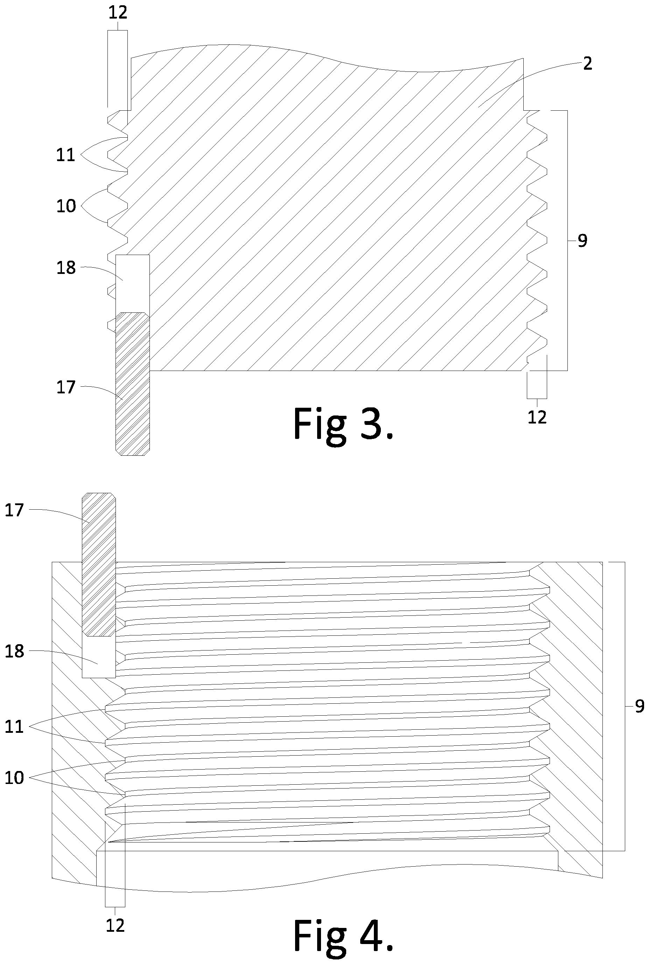

In reference to **Figs. 1 and 2**, an externally-threaded male portion **1** of a component comprises a shank **2** comprising a generally circular diameter **3** and an axial length **4**. An internally threaded female portion **5** of a component comprises a generally circular recess **6** comprising a generally circular diameter **7** and an axial depth **8**. The distance along the axial length of the shank of the male component and/or the axial depth of the recess of the female component that is threaded is referred to herein as the "threaded length" **9**. In reference to **Figs. 3 and 4**, each thread of the male and/or female component comprises a crest **10** and a channel **11**. The distance between the crest and channel of the threads is referred to herein as the "thread depth" **12**.

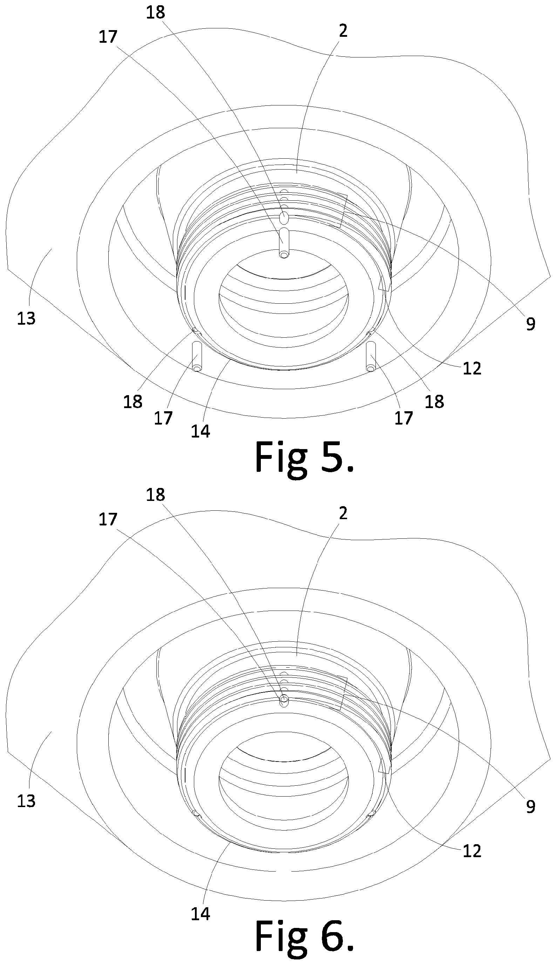

The present disclosure further provides one or more malleable thread tightening pins located within the threads of the threaded portion of the male or female component. With reference to **Figs. 5-9**, a first component **13** comprising an externally-threaded male portion **14** is provided which engages corresponding threads on an internally-threaded female portion **16** of a second component **15**. In certain embodiments, the first component **13** can be a bell cup and the second component **15** can be a turbine apparatus. Externally-threaded male portion **14** or internally-threaded female portion **16** comprises one or more thread tightening pins **17** that are inserted within corresponding pin holes **18**.

In certain embodiments, the self-locking threaded fastening assembly comprises one, two three, four, five, six, seven, eight, nine, ten, or more thread tightening pins. In certain examples, 1-6 thread tightening pins are employed. In further examples, 2-4 thread tightening pins are employed. In particular examples, three thread tightening pins are employed.

In certain embodiments, when more than one thread tightening pins are employed, the pins are spaced at substantially equal distance from one another around the circumference of the male or female component. For example, where two thread tightening pins are employed, they are placed about 180 degrees apart from one another, for example 162-198 degrees apart around the circumference of the male or female component. In other examples in which three thread tightening pins are employed, they are placed about 120 degrees apart from one another, for example 108-132 degrees apart around the circumference of the male or female component. In further examples in which four thread tightening pins are employed, they are placed about 90 degrees apart from one another, for example 81-99 degrees apart around the circumference of the male or female component.

Thread tightening pins of the present invention comprise a malleable material. Using a malleable material allows for increased contact between the threads of the mating components during thread tightening. When the threads to be tightened come into contact, the threads also contact the thread tightening pin(s). Upon rotation of the two components relative to one another to tighten the fastener system, the malleable material is distributed within the area between the mating threads, thereby enhancing contact between the threads of the two components. Embodiments of the disclosure can provide surprising effective vibration dampening, thread alignment, thread tightening, thread locking, and antislipping.

In certain embodiments, the malleable material is an elastomeric, thermoset, or thermoplastic material, such as nylon or similar polyamide materials, polytetrafluoroethtylene (PTFE), or polyether ether ketone (PEEK).

In certain embodiments, the malleable material is a malleable metallic material, ferrous or non-ferrous, such as bronze or lead.

In certain embodiments, the malleable material is an absorbent material. In certain environments, absorbent materials can have advantageous properties. For example, in applications where the components will be exposed to a solvent, an absorbent material that expands upon exposure to the solvent can be used, thereby resulting in further tightening of the threads during use. In certain embodiments, the absorbent material can be a polyamide such as nylon.

Thread tightening pins of the present disclosure will have a length and a cross sectional shape. Thread tightening pins of the present disclosure can have a cross sectional shape of any suitable shape, including a generally square, generally rectangular, generally circular, or generally oval cross section. In certain embodiments, the thread tightening pins have a generally circular cross section, providing an overall shape that is generally cylindrical. Using thread tightening pins with such a cross section can provide certain advantages such as, for example, that the pin hole can be readily produced within the threads using a common drill bit.

In certain embodiments, the cross-sectional shape and width/diameter is generally constant along the length of the thread tightening pins. In other embodiments, the thread tightening pins will have a cross sectional width/diameter that is tapered such that the width/diameter of the thread tightening pin is greater at one end of the thread tightening pin than the other, for example 2%-20% greater at one end of the thread tightening pin than the other depending on the pin length. In certain embodiments, such a tapered shape can be useful, for example, for ensuring that the thread tightening pin fits tightly in its pin hole so that it does not inadvertently become dislodged from the component prior to assembly.

Thread tightening pins of the present disclosure are generally straight along their length. The length of thread tightening pins is generally at least 2 times greater than the thread pitch so as to provide for at least 2 threads of pin engagement. As used herein, the phrase "thread pitch" means the distance between the crests of two adjacent threads. In certain examples, the length of the thread tightening pin is 2-20 times greater than the thread pitch. In other examples, the length of the thread tightening pin is 2-15 times, 2-10 times, 2-8 times, 2-6 times, 2-5 times, 2-4 times, or 2-3 times greater than the thread pitch.

In certain embodiments, the width/diameter of the thread tightening pin can be from about 25% to about 200% of the thread depth. In particular examples, the width/diameter of the thread tightening pin can be from about 40% to about 150% of the thread depth. In other examples, the width/diameter of the thread tightening pin can be from about 50-125%, about 60-110%, about 70-100% or about 80-100% of the thread depth.

In certain embodiments, the pin hole into which the thread tightening pin is inserted is of a similar shape and diameter as the thread tightening pin such that the thread tightening pin can be readily inserted into the pin hole without it inadvertently falling out of the pin hole. In certain examples, the width/diameter of the pin hole is about 75%, 80%, 85%, 90%, 95%, 100%, 105%, 110%, 115%, or 120% of the width/diameter of the thread tightening pin. In particular examples, the width/diameter of the pin hole is about 95%-100% of the width/diameter of the thread tightening pin.

As illustrated in **Figs. 3-9**, in certain embodiments, the one or more thread tightening pins **17** are located within pin holes **18** within at least a portion of the thread depth and along at least a portion of the threaded length. The pin holes are provided such that they are substantially perpendicular to the threads and substantially parallel to the axial depth of the recess of an internally-threaded female portion or the axial length of the shaft of an externally-threaded male portion.

As illustrated in **Figs. 3 and 4**, the pin hole is positioned such that the crest **10** of the thread remains intact along the region of the pin hole **18**. In certain examples, about 5%, 10%, 15%, 20%, 25%, 30%, 35%, 40%, 45%, 50%, 55%, 60%, or 65% of the thread depth can remain intact on the crest-side of the thread.

Depending on the width/diameter of the pin hole, the channel **11** of the thread along the region of the pin hole **18** can remain intact or not. In certain embodiments, such as where the width/diameter of the pin hole and thread tightening pin are substantially less than the thread depth, the channel of the thread will remain intact, while in other embodiments, such as where the width/diameter of the pin hole and thread tightening pin is similar to or greater than the thread depth, the channel of the thread will not remain intact along the region of the pin hole. In the embodiments shown in **Figs. 3 and 4**, channel **11** of the thread does not remain intact along the region of the pin hole **18.**

The pin hole can be positioned such that it comprises the entirety of the threaded length or only a portion of the threaded length. For example, as illustrated in **Figs. 3 and 4**, the pin hole **18** can comprise only a portion of the threaded length **9** such that some threads do not include a pin hole and thread tightening pin. In certain examples, the pin hole and/or thread tightening pin can comprise about 10%, 20%, 30%, 40%, 50%, 60%, 70%, 80%, 90%, or 100% of the threaded length.

In certain embodiments, the present disclosure provides a rotary paint atomizer apparatus comprising the self-locking threaded fastening assembly as disclosed herein. Rotary paint atomizer apparatuses are known in the art. Exemplary rotary paint atomizer apparatuses can be found, e.g., in U.S. 8,973,848 and U.S. 9,375,734, both of which are incorporated by reference herein.

In certain embodiments, the disclosure is provided by reference to **Fig. 5**, which depicts a perspective view of a component **13** which includes an externally-threaded male portion **14** where the thread tightening pins **17** are not inserted in the pin holes **18,** and **Fig. 6**, which depicts a perspective view of the same screw thread where the thread tightening pins **17** are inserted in the pin holes **18**. In **Figs. 5 and 6**, the threaded portion comprises three generally cylindrical thread tightening pins **17** and three generally cylindrical pin holes **18**. The thread tightening pins **17** are sized and shaped so as to fit within the pin holes **18**. The externally-threaded male portion **14** has a shank **2** with a threaded portion comprising a threaded length **9** and a thread depth **12**.

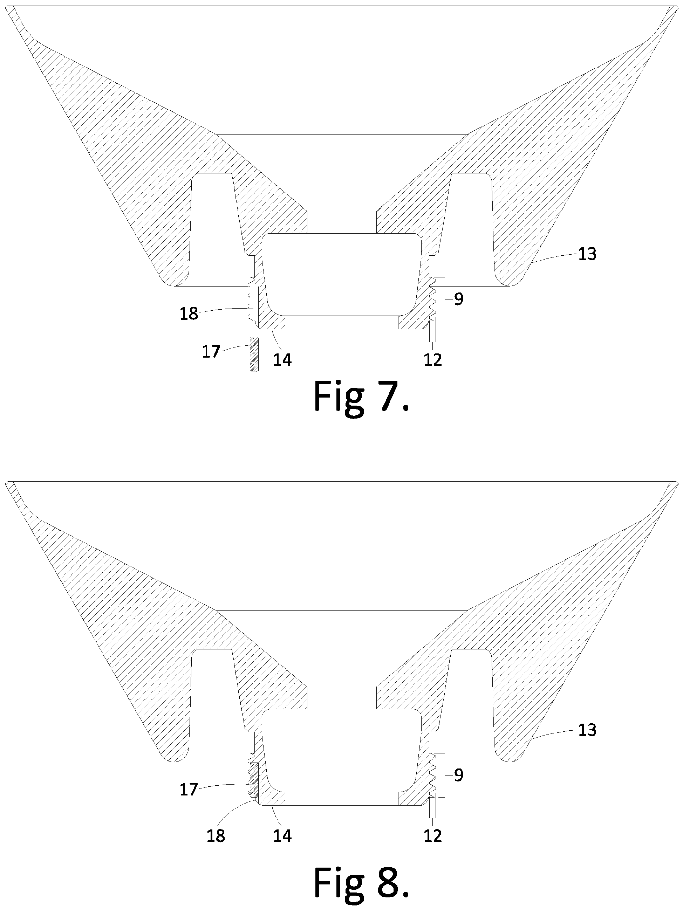

**Figs. 7 and 8** illustrate a cross sectional view of the component of **Figs. 5 and 6**. In **Fig. 7**, thread tightening pin **17** is not inserted in pin hole **18**, and in **Fig. 8** thread tightening pin **17** is inserted in pin hole **18**. As these figures illustrate, in this embodiment, pin hole **18** and thread tightening pin **17** extend along the majority of threaded length **9**.

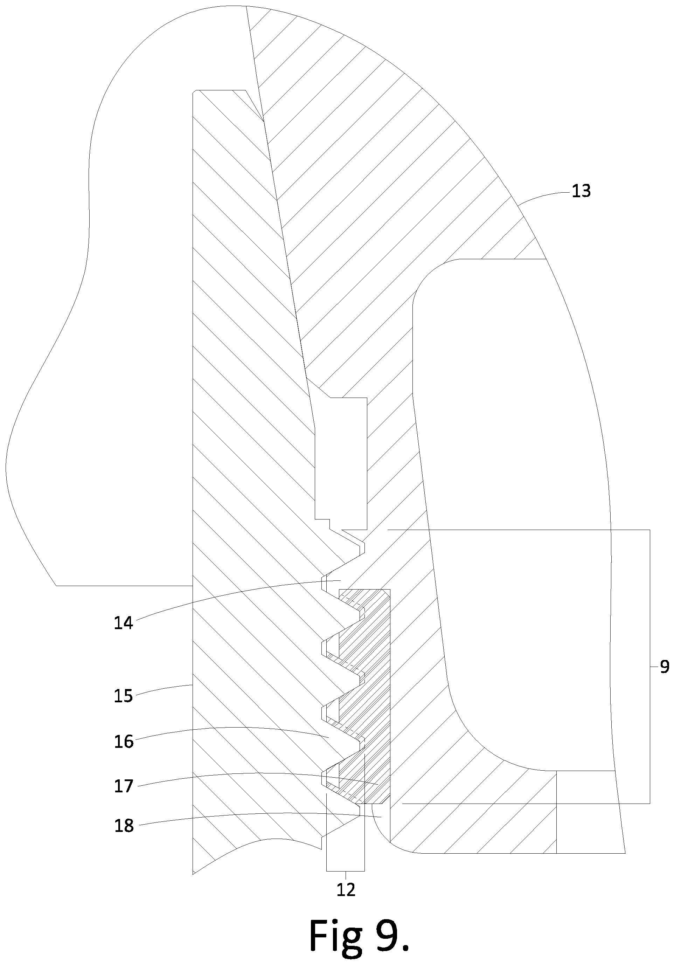

**Fig. 9** illustrates a cross sectional view of the component **13** of **Figs. 5-8** which is engaged with corresponding threads of internally-threaded female portion **16** of a second component **15**. As this illustrates, engagement of the corresponding threads results in deformation of thread tightening pin **17** in a manner that effectively fills the gap between the corresponding threads of the two components along at least a portion of the area comprising the thread tightening pin.

## Claims

1. A self-locking threaded fastening assembly, the assembly comprising:
a first component comprising an externally-threaded male portion and a second component comprising an internally-threaded female portion, wherein the externally-threaded male portion and the internally-threaded female portion each comprise a thread depth and threaded length, wherein the thread depth is defined by the distance between a crest of the thread and a channel of the thread, wherein the threaded length is defined by the distance along the longitudinal axis of the threaded portion that comprises threads,
wherein the externally-threaded male portion or the internally-threaded female portion comprises one or more pin holes therein, wherein the one or more pin holes are substantially perpendicular to the threads and are substantially parallel to the longitudinal axis of the threaded length, wherein the one or more pin holes are positioned such that they lie within at least a portion of the thread depth leaving the crest of the threads intact, and
wherein each of the one or more pin holes comprises a thread tightening pin inserted therein, wherein the thread tightening pin comprises a malleable material.

2. The self-locking threaded fastening assembly of claim 1, wherein the thread tightening pin comprises an elastomeric material selected from the group consisting of thermoplastic or thermoset materials.

3. The self-locking threaded fastening assembly of claim 2, wherein the thread tightening pin comprises a material selected from the group consisting of nylon and polyether ether ketone.

4. The self-locking threaded fastening assembly of claim 1, wherein the thread tightening pin comprises a malleable metallic material.

5. The self-locking threaded fastening assembly of claim 4, wherein the thread tightening pin comprises a material selected from the group consisting of bronze, and lead.

6. The self-locking threaded fastening assembly according to any one of claims 1-5, wherein the one or more thread tightening pins comprise a length and a cross sectional shape comprising a width or diameter, wherein the length of the thread tightening pins is at least 2 times greater than the thread pitch.

7. The self-locking threaded fastening assembly according to any one of claims 1-5, wherein the one or more thread tightening pins comprise a length and a cross sectional shape comprising a width or diameter, wherein the width or diameter of the thread tightening pin is about 40% to about 150% of the thread depth.

8. The self-locking threaded fastening assembly according to any one of claims 1-7, wherein the width/diameter of the pin holes are about 95% to 100% of the width/diameter of the thread tightening pins.

9. The self-locking threaded fastening assembly according to any one of claims 1-8, wherein the one or more pin holes and corresponding thread tightening pins are cylindrically shaped.

10. The self-locking threaded fastening assembly according to any one of claims 1-9, wherein the assembly comprises 1-6 pin holes and corresponding thread tightening pins.

11. The self-locking threaded fastening assembly according to any one of claims 1-10, wherein the assembly comprises 3 pin holes and corresponding thread tightening pins.

12. The self-locking threaded fastening assembly according to any one of claims 1-11, wherein the assembly comprises a plurality of pin holes, wherein the pin holes are substantially equally spaced along the circumference of the threaded portion.

13. The self-locking threaded fastening assembly according to any one of claims 1-12, wherein the externally-threaded male portion comprises the one or more pin holes.

14. The self-locking threaded fastening assembly according to any one of claims 1-12, wherein the internally-threaded female portion comprises the one or more pin holes.

15. A rotary paint atomizer apparatus comprising a self-locking fastening assembly according to any one of claims 1-14.
